# EUROPÄISCHE PATENTSCHRIFT

(11) **EP 2 743 439 B1**
(45) Veröffentlichungstag und Bekanntmachung des Hinweises auf die Patenterteilung: **29.04.2015**
(21) Anmeldenummer: 12196820.0
(22) Anmeldetag: 12.12.2012
(51) Int. Cl.: E06B 9/68, H02H 7/085

(54) **Verfahren zum Betreiben eines elektrischen Rollladens, elektrischer Rollladen, insbesondere für ein Dachfenster, Steuerung und Dachfenster mit einem derartigen Rollladen**
Method for operating an electric roller blind, electrical roller blind, in particular for a roof window, controller, and roof window with such a roller blind
Procédé de fonctionnement d'un store électrique, store électrique, en particulier pour une fenêtre de toit, commande et fenêtre de toit équipée d'un tel store

(43) Veröffentlichungstag der Anmeldung: 18.06.2014
(73) Patentinhaber: HEIM & HAUS Holding GmbH, 47169 Duisburg-Hamborn (DE)
(72) Erfinder: Nühlen, Heinz-Theo, 46535 Dinslaken (DE)
(74) Vertreter: Rupprecht, Kay

(56) Entgegenhaltungen:
- WO-A1-92/11432
- DE-A1- 3 933 266
- DE-A1-102005 038 517
- DE-A1-102010 012 181
- DE-U1-202005 003 434
- FR-A2- 2 666 371

## Beschreibung

Die Erfindung betrifft ein Verfahren zum Betreiben eines mittels eines Gleichstrommotors elektrisch antreibbaren Rollladens, einen elektrisch antreibbaren Rollladen, insbesondere für ein Dachfenster und eine Steuerung zum Überprüfen einer Abschaltbedingung. Die Erfindung bezieht sich ferner auf ein Dachfenster mit einem derartigen Rollladen.

Rollläden sind unterschiedlichen Witterungsbedingungen ausgesetzt. Insbesondere im Winter, d.h. bei niedrigen Außentemperaturen, besteht die Gefahr, dass der Rollladen vereist. Dies führt zu einer Blockade des Rollladens, was insbesondere bei elektrisch betriebenen Rollläden zu einer Beschädigung des elektrischen Motors oder Rollladenpanzers führen kann. Eine Blockade des Rollladens kann auch auf andere Weise erzeugt werden, beispielsweise durch Fremdkörper in den Rollladenschienen.

Ein Verfahren zum Überwachen der Betriebs eines Rolladens, der mittels eines mit Netzwechselspannung betriebbaren Asynchron-Antriebsmotors antreibbar ist, ist durch DE 102010012181 A1 bekannt.

Die Aufgabe der Erfindung besteht darin, einen Rollladen, insbesondere für ein Dachfenster, sowie ein Verfahren zum Betreiben desselben zu schaffen, der bzw. das derart angepasst ist, dass eine Beschädigung des Rollladens durch ein plötzliche Blockade des Fahrwegs des Rollladens vermieden wird. Ferner besteht die Aufgabe der Erfindung darin, ein Dachfenster mit einem derartigen Rollladen und eine entsprechende Steuerung zu schaffen.

Die oben genannte Aufgabe wird durch ein Verfahren mit den Merkmalen des Anspruchs 1 gelöst.

Das Verfahren dient zur Überwachen des Betriebs eines Rollladens, der elektrisch mittels eines Gleichstrommotors antreibbar ist. Das Verfahren weist die folgenden Schritte auf: Messen eines während des Betriebs des Rollladens durch den Elektromotor aufgenommenen Stroms mittels eines Messerelements; Ermitteln mindestens eines Strom-Referenzwertes durch wiederholtes bestimmen des Mittelwerts des gemessenen Stroms mittels eines positiv rückgekoppelten Integrierglieds; und Bilden eines Differenzsignals zwischen dem Strom-Referenzwert und einem aktuell durch den Elektromotor aufgenommenen und gemessenen Strom mittels eines Differenzierglieds.

Besonders vorteilhaft ist es, wenn das Differenzsignal mit einem vorbestimmten Schwellwert verglichen wird. Der Betrieb des Rollladens kann dann unterbrochen oder abgestellt werden, wenn das Differenzsignal den vorbestimmten Schwellwert überschreitet. Der Schwellwert liegt vorzugsweise im Bereich von ca. 10-30% des Strom-Referenzwertes und insbesondere beträgt er ca. 10%, ca. 15%, ca. 20%, ca. 25% oder ca. 30% des Strom-Referenzwertes. Besonders vorteilhaft ist es, wenn der von dem Elektromotor aufgenommene Strom kontinuierlich gemessen wird. Die Strommessung kann dabei in der Zuleitung des Elektromotors mittels eines herkömmlichen Strommessgerätes erfolgen. Weiterhin erfolgt die Strommessung vorzugsweise im Normalbetrieb des Rollladens. Wenn der durch den Elektromotor aufgenommene und erfasste Strom den Strom-Referenzwert um den vorbestimmten Schwellwert überschreitet, wird vorzugsweise ein optisches und/oder akustisches Warnsignal erzeugt. Weiterhin ist es möglich, einen ersten Strom-Referenzwert für eine Auffahrt und einen zweiten Strom-Referenzwert für eine Abfahrt eines Rollladenpanzers zu ermitteln. Dadurch werden die bei einer Auf- und Abfahrt auf den Elektromotor wirkenden unterschiedlichen Kräfte berücksichtigt.

Die Erfindung beruht ferner auf dem Gedanken, einen Rollladen, insbesondere für ein Dachfenster, mit einem Elektromotor zum Auf- und Abfahren des Rollladens und einer Steuerung anzugeben, die einerseits mit ein Messelement zur kontinuierlichen Erfassung eins Stromstärkewerts des Elektromotors und andererseits mit dem Elektromotor signalverbunden ist derart, dass eine Bewegung des Elektromotors gestoppt wird oder werden kann, wenn eine Abschaltbedingung erfüllt ist. Die Abschaltbedingung ist dann erfüllt, wenn ein aktuell gemessener Stromstär-kewert des Elektromotors beispielsweise um wenigstens 10 % von einem Gleichwert oder Gleichrichtwert des kontinuierlich erfassten Stromstärkewerts, d.h. von dem wenigstens einen Strom-Referenzwert, abweicht.

Die Erfindung fußt auf der Idee, die Stromaufnahme, d.h. den Stromstärkewert, des Elektromotors wiederholt, vorzugsweise kontinuierlich zu erfassen. Aus den gemessenen Stromstärkewerten wird der Mittelwert bzw. der Betrag des Mittelwerts, also der Gleichwert oder Gleichrichtwert, ermittelt. Dieser Wert bildet den Strom-Referenzwert. Dieser Vorgang erfolgt vorzugsweise wiederholt bzw. kontinuierlich, so dass das Auf- und Abfahren des Rollladens bzw. Rollladenpanzers im Normalbetrieb, also ohne eine Blockade, im Wesentlichen als Lernfahrt angesehen werden kann. Je nach Witterungsbedingungen, Verschmutzung oder Verschleiß können sich die gemessenen Stromstärkewerte des Elektromotors, d.h. die Stromaufnahme des Elektromotors, ändern. Durch die Lernfahrt, also die kontinuierliche Messung und Mittelwertbildung des Stromstärkewerts wird der Referenzwert für die Abschaltbedingung kontinuierlich angepasst. Erst wenn der aktuell gemessene Stromstärkewert des Elektromotors einen Schwellwert übersteigt, der beispielsweise wenigstens 10 % - 30% vom kontinuierlich ermittelten Gleichwert und Gleichrichtwert (Strom-Referenzwert) beträgt, wird der Elektromotor bzw. Rollladen gestoppt. Ein sprunghafter Anstieg der Stromaufnahme des Elektromotors, beispielsweise durch eine Blockade infolge von Vereisung bzw. Frost, bewirkt eine Unterbrechung der Rollladenfahrt. Im Wesentlichen kann die Steuerung dazu angepasst sein, eine adaptive Überstromabschaltung zu realisieren.

Die oben genannte Aufgabe wird außerdem durch einen Rollladen mit den Merkmalen des Anspruchs 8 gelöst.

Der Rollladen ist insbesondere zur Montage an einem Dachfenster vorgesehen und weist einen Rollladenpanzer, einen Elektromotor zum Auf- und Abfahren des Rollladenpanzers und ein Messelement zum Messen eines von dem Elektromotor aufgenommenen Stroms auf. Der Rollladen zeichnet sich durch eine Steuerung aus, die zum Überprüfen einer Abschaltbedingung für den Elektromotor ausgebildet ist, wobei die Abschaltbedingung dann erfüllt ist, wenn ein aktuell von dem Elektromotor aufgenommener und von dem Messelement erfasster Strom einen Strom-Referenzwert um einen vorbestimmten Schwellwert überschreitet, wobei es sich bei dem Strom-Referenzwert um einen Mittelwert des bis zu diesem Zeitpunkt gemessenen Stroms handelt.

Vorzugsweise ist das Messelement zum kontinuierlichen Messen des von dem Elektromotor aufgenommenen Stroms ausgebildet. Der Rollladen weist einen Gleichstrommotor auf. Dieser Gleichstrommotor kann von einer Solaranlage mit Energie gespeist werden. Weiterhin kann eine Signaleinrichtung zum Erzeugen eines optischen und/oder akustischen Warnsignals vorgesehen sein, die ein Signal erzeugt, wenn der durch den Elektromotor aufgenommene und von dem Messelement erfasste Strom den Strom-Referenzwert um den vorbestimmten Schwellwert überschreitet.

Es ist vorgesehen, dass die Steuerung ein Integrierglied zur Bestimmung des Strom-Referenzwertes des kontinuierlich gemessenen Stromstärkewerts umfasst. Außerdem weist die Steuerung ein Differenzierglied zur Ermittlung eines Differenzwerts zwischen einem aktuell gemessenen Stromstärkewert und dem Strom-Referenzwert auf. Ferner weist die Steuerung ein Vergleichsglied zum Vergleichen des Differenzwerts mit dem Strom-Referenzwert auf. Das Integrierglied kann einen Eingang aufweisen, der mit dem Messelement verbunden ist. Das Integrierglied erhält so vom Messelement den erfassten Stromstärkewert und bildet im zeitlichen Verlauf daraus den Gleichwert oder Gleichrichtwert. Der Gleichrichtwert wird anschließend auf den gemessenen Stromstärkewert aufaddiert und dem Integrierglied zugeführt. Im Wesentlichen kann so ein Regelkreis bereitgestellt werden. Generell wird die Gleichwert- bzw. Gleichrichtwertermittlung kontinuierlich, vorzugsweise unterbrechungsfrei, durchgeführt.

Der kontinuierlich ermittelte Gleichwert oder Gleichrichtwert, d.h. der Strom-Referenzwert, wird einem Differenzierglied zugeführt. Das Differenzierglied kann einen Eingang aufweisen, der mit einem Ausgang des Integrierglieds verbunden ist. Das Differenzierglied ermittelt die Differenz bzw. den Differenzwert zwischen einem aktuell gemessenen Stromstärkewert und dem Gleichwert oder Gleichrichtwert. Mit anderen Worten wird die Differenz zwischen dem diskret aufgenommenen Stromstärkewert und dem Mittelwert aller vorangegangenen Stromstärkewerte errechnet. Das Differenzierglied kann ein Differenzwertsignal ausgeben, das von einem Vergleichsglied empfangen wird. Das Vergleichsglied kann einen Eingang aufweisen, der mit einem Ausgang des Differenzierglieds verbunden ist. Das Vergleichsglied vergleicht den Differenzwert bzw. das Differenzwertsignal mit dem Gleichwert oder Gleichrichtwert des kontinuierlich ermittelten Stromstärkewerts. Mit anderen Worten prüft das Vergleichsglied, ob die Abschaltbedingung erfüllt ist, insbesondere ob der aktuell gemessene Stromstärkewert um wenigstens 10 % vom Gleichwert oder Gleichrichtwert abweicht.

In diesem Zusammenhang wird darauf hingewiesen, dass als Stromstärkewert im Rahmen der Anmeldung nicht nur ein diskreter Wert, sondern auch ein Stromstärkesignal, d.h. ein kontinuierlicher Stromstärkeverlauf, bezeichnet wird, welcher von dem Elektromotor während des Betriebs des Rollladens aufgenommen wird.

In einer weiteren bevorzugten Ausführungsform kann die Steuerung mit einem Schalter zur Unterbrechung der Stromzufuhr mit dem Elektromotor signalverbunden sein. Somit kann die Stromzufuhr zum Elektromotor unterbrochen werden, wenn die Abschaltbedingung erfüllt ist. Der Schalter ist vorzugsweise derart von der Steuerung ansteuerbar, dass die Stromzufuhr bei Erfüllung der Abschaltbedingung zumindest temporär unterbrochen wird.

Ferner kann vorgesehen sein, dass die Steuerung zwei unabhängige Gleichwerte oder Gleichrichtwerte bzw. Strom-Referenzwerte ermittelt. Dabei kann ein erster Gleichwert oder Gleichrichtwert einer Auffahrt und einer zweiter Gleichwert oder Gleichrichtwert einer Abfahrt des Rollladens zugeordnet sein. Es hat sich gezeigt, dass die Stromaufnahme des Elektromotors bei der Auffahrt des Rollladens und bei der Abfahrt des Rollladens stark variiert. Bei der Abfahrt des Rollladens trägt insbesondere das Gewicht des Rollladenpanzers dazu bei, dass eine kleinere Stromaufnahme, also ein kleinerer Stromfluss, vorliegt als bei der Auffahrt des Rollladens. Daher kann vorgesehen sein, dass die Steuerung zwei unabhängige Gleichwerte oder Gleichrichtwerte ermittelt, also zwei unterschiedliche Referenzwerte für die Abschaltbedingung. Ein erster Referenzwert wird der Abschaltbedingung zugrunde gelegt, wenn der Rollladen aufgefahren wird. Der zweite Referenzwert wird der Abschaltbedingung zugrunde gelegt, wenn sich der Rollladen in der Abfahrt befindet.

Ferner kann vorgesehen sein, dass die Steuerung ein Gegenfahrtsignal erzeugt, so dass der Rollladenpanzer zumindest teilweise in eine Gegenrichtung bewegt wird, wenn die Abschaltbedingung erfüllt ist. Sobald die Steuerung anhand der Stromaufnahme des Elektromotors erkennt, dass der Rollladenpanzer blockiert ist, beispielsweise durch Frost, kann ein Gegenfahrtsignal erzeugt werden. Der Rollladenpanzer fährt dann in die entgegengesetzte Richtung frei. Anschließend kann ein neuer Vorgang gestartet werden. Mit anderen Worten kann der Rollladenpanzer nach der Freifahrt wieder in die ursprüngliche Richtung bewegt werden. Dies kann mehrfach wiederholt werden, bis entweder eine Maximalanzahl von Wiederholungen erreicht ist und der Rollladen endgültig stoppt oder der Rollladen frei ist, die Blockade also nicht mehr vorliegt.

Ein nebengeordneter Aspekt der Erfindung betrifft eine Steuerung zum Überprüfen einer Abschaltbedingung für den Elektromotor eines Rollladens mit den Merkmalen des Anspruchs 16 und ein Dachfenster mit einem erfindungsgemäßen Rollladen gemäß Anspruch 17.

Die Erfindung wird im Folgenden anhand eines Ausführungsbeispiels unter Bezugnahme auf die beigefügten schematischen Zeichnungen näher erläutert. Darin zeigen
- Fig. 1:: ein Dachfenster mit einem erfindungsgemäßen Rollladen nach einem bevorzugten Ausführungsbeispiel; und
- Fig. 2:: ein Ablaufschema für die Steuerung eines erfindungsgemäßen Rollladens nach einem bevorzugten Ausführungsbeispiel.

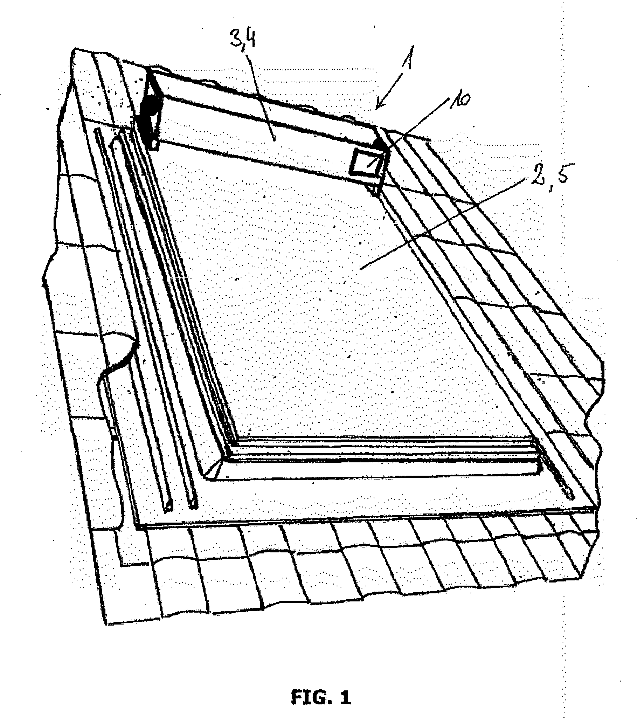

Die Erfindung betrifft insbesondere Rollläden 2 für Dachfenster 1. Ein Dachfenster 1 ist in Fig. 1 gezeigt. Das Dachfenster 1 umfasst den Rollladen 2. Der Rollladen 2 weist wiederum einen Rollladenpanzer 5 auf, der in einem Rollladenkasten 3 um eine Welle wickelbar ist. Im Rollladenkasten 3 ist ferner ein Elektromotor 4 integriert, der insbesondere als Rohrmotor ausgebildet sein kann. Der Elektromotor 4 dient als Antrieb für den Rollladen 2 bzw. den Rollladenpanzer 5 und ist vorzugsweise als 12V Gleichstrommotor ausgebildet.

Der Elektromotor 4 kann den Rollladenpanzer 5 in zwei Richtungen bewegen. Einerseits ermöglicht der Elektromotor 4 eine Aufwärtsbewegung bzw. Auffahrt und andererseits eine Abwärtsbewegung bzw. Abfahrt des Rollladenpanzers 5. Bei der Abfahrt des Rollladenpanzers 5 wird die Fensteröffnung des Dachfensters 1 verschlossen, bei der Auffahrt geöffnet.

In den Rollladenkasten 3 ist ferner eine Steuerung 10 integriert. Die Steuerung 10 ist mit dem Elektromotor 4 signalverbunden. Der Elektromotor kann beispielsweise durch eine in der Nähe des Rollladens oder unmittelbar an dem Rollladen angebrachte Solaranlage mit Energie gespeist werden. Ferner kann die Steuerung 4 mit einem Messelement 11 signalverbunden sein, das die Stromaufnahme des Elektromotors 4 erfasst. Das Messelement 11 kann durch einen Strommesser, insbesondere einen Stromwandler oder ein Amperemeter gebildet sein.

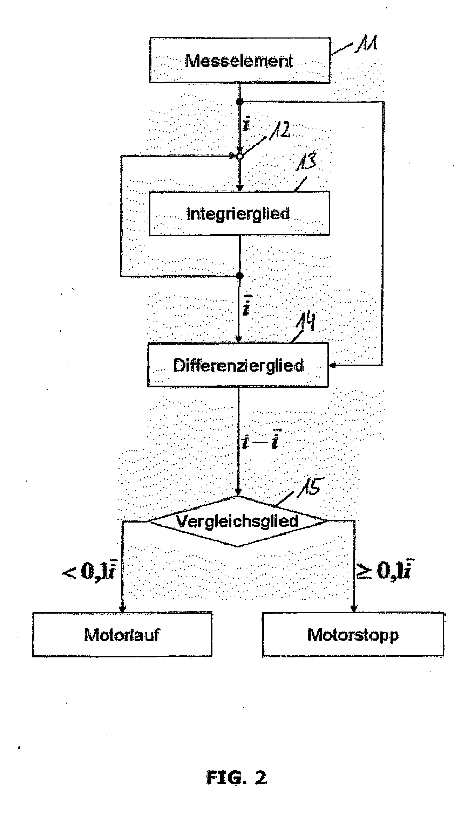

Wie in Fig. 2 zu erkennen ist, umfasst die Steuerung ein Integrierglied 13 und ein Differenzierglied 14. Ferner ist ein Vergleichsglied 15 vorgesehen. Die Steuerung funktioniert wie folgt:
Das Messelement 11 erfasst kontinuierlich die Stromaufnahme des Elektromotors 4. Somit stellt das Messelement 11 kontinuierlich Stromstärkewerte bzw. ein Stromstärkesignal I bereit. Das Stromstärkesignal I wird einerseits dem Integrierglied 13 weitergereicht. Dasselbe Stromstärkesignal I wird außerdem dem Differenzierglied 14 übermittelt.

Das Integrierglied 13 bestimmt anhand der empfangenen Stromstärkesignale I den Strom-Referenzwert, der durch einen kontinuierlichen Mittelwert, insbesondere den Gleichrichtwert oder Gleichwert des gemessenen Stromstärkesignals I gebildet wird. Vorzugsweise wird der Gleichrichtwert bestimmt. Dazu ist das Integrierglied in einen Regelkreis eingebunden. Das Gleichrichtwertsignal, das an einem Ausgang des Integrierglieds 13 anliegt, wird einerseits zurückgeführt und mittels eines Addierglieds dem Stromstärkesignal I aufaddiert. Das addierte Signal wird wiederum dem Integrierglied 13 zugeführt. Auf diese Weise wird der Gleichrichtwert bzw. das Gleichrichtwertsignal kontinuierlich an Schwankungen des Stromstärkesignals angepasst. Ferner wird der ermittelte Gleichrichtwert an das Differenzierglied 14 weitergereicht. Das Differenzierglied 14 weist insbesondere zwei Eingänge auf, einen Gleichrichtwerteingang und einen Stromstärkewerteingang. Das Differenzierglied 14 bildet die Differenz zwischen dem Stromstärkewert bzw. Stromstärkesignal und dem Gleichrichtwert bzw. Gleichrichtsignal. Somit ergibt sich ein Differenzwert bzw. Differenzwertsignal, das am Ausgang des Differenzierglieds 14 anliegt. Das Differenzwertsignal wird an ein Vergleichsglied 15 übermittelt. Das Vergleichsglied 15 vergleicht das Differenzwertsignal mit einem Schwellwert. Der Schwellwert liegt vorzugsweise in einem Bereich zwischen 10-30% des Strom-Referenzwertes. Beispielsweise kann der Schwellwert dem 0,1-fachen des Gleichrichtwerts bzw. Gleichrichtwertsignals (Strom-Referenzwert) entsprechen. Ist der Differenzwert bzw. das Differenzwertsignal größer als der Schwellwert, beispielsweise also größer als das 0,1-fache des Gleichrichtwerts bzw. Gleichrichtwertsignals, so ist eine Abschaltbedingung erfüllt und der Elektromotor 4 wird gestoppt. Das Stoppen des Elektromotors 4 und somit des Rollladens 2 erfolgt also vorzugsweise bei einer Abweichung des aktuellen Differenzwerts bzw. Differenzwertsignals von mindestens 10 % - 30% gegenüber dem Strom-Referenzwert, der den bis zu diesem Zeitpunkt wiederholt bzw. kontinuierlich gemessenen Mittelwert des aufgenommenen Stroms darstellt. Ist hingegen der Differenzwert bzw. das Differenzwertsignal kleiner als der Schwellwert, beispielsweise also kleiner als das 0,1-fache des Gleichwerts bzw. Gleichwertsignals, d. h. die Abweichung zwischen Differenzwert und Gleichrichtwert ist geringer als 10 % des Gleichrichtwerts, so ist die Abschaltbedingung nicht erfüllt und der Elektromotor läuft weiter.

Wenn die Abschaltbedingung erfüllt ist, wird der Elektromotor 4 zumindest temporär gestoppt, d.h. der Betrieb wird unterbrochen. Die Steuerung 10 kann überdies ein Gegenfahrtsignal erzeugen, sobald die Abschaltbedingung erfüllt ist. Das Gegenfahrtsignal wird an den Elektromotor 4 übertragen und bewirkt, dass der Elektromotor 4 den Rollladen 2 bzw. Rollladenpanzer 5 in die Gegenrichtung bewegt. Wird die Abschaltbedingung beispielsweise bei einer Abwärtsbewegung des Rollladenpanzers 5 erfüllt, kann das Gegenfahrtsignal dazu führen, dass der Elektromotor 4 den Rollladenpanzer 5 stoppt und in die Gegenrichtung aufwärts fährt. Auf diese Weise kann der Rollladenpanzer 5 frei gefahren werden. Es ist möglich, dass dieser Vorgang mehrfach wiederholt wird. Die Anzahl der Wiederholungen kann begrenzt sein. Beispielsweise kann die Steuerung 10 derart angepasst sein, dass nach höchstens 10 erfolglosen Wiederholungen der Elektromotor 4 vollständig gestoppt wird, um eine Beschädigung des Rollladens 2 zu vermeiden.

Im Allgemeinen kann vorgesehen sein, dass die Steuerung zwei unterschiedliche Gleichwerte bzw. Gleichrichtwerte als Strom-Referenzwerte für die Abschaltbedingung berücksichtigt. Da bei der Auffahrt oder der Abfahrt des Rollladens 2 unterschiedlich starke Ströme fließen, der Elektromotor 4 also eine unterschiedliche Stromaufnahme bei der Auffahrt und der Abfahrt aufweist, werden die Gleichwerte bzw. Gleichrichtwerte der für die Auffahrt des Rollladenpanzers 5 und die Abfahrt des Rollladenpanzers 5 jeweils getrennt voneinander ermittelt. Vorzugsweise werden die Strom-Referenzwerte in einer Speichereinheit gespeichert. Die Speichereinheit kann dazu angepasst sein, zwei separate Gleichwerte und Gleichrichtwerte zu speichern, wobei ein erster Gleichwert bzw. Gleichrichtwert der Auffahrt des Rollladenpanzers 5 und ein zweiter Gleichwert bzw. Gleichrichtwert einer Abfahrt des Rollladenpanzers 5 zugeordnet ist.

Die Erfindung hat den Vorteil, dass einerseits eine Beschädigung von Rollläden 2 vermieden wird, indem plötzliche Blockaden des Rollladens 2 durch die Steuerung 10 erkannt und der Elektromotor 4 entsprechend gestoppt wird. Insofern wird bei der Erfindung im Wesentlichen eine adaptive Überstromabschaltung realisiert. Dies kann bei unterschiedlichen Rollladengrößen und Einbaulagen angewendet werden. Die Steuerung stellt sich also im Wesentlichen auf die jeweilige Einbaulage oder Rollladengröße ein.

Im Rahmen der vorliegenden Anmeldung wird ferner ein Verfahren zur Steuerung eines Rollladens 2, insbesondere eines Rollladens 2 für ein Dachfenster 1, offenbart, bei dem ein Stromstärkesignal eines Elektromotors vorzugsweise kontinuierlich erfasst und mit einem Strom-Referenzwert, verglichen wird, wobei der Strom-Referenzwert dem Gleichwertsignal oder Gleichrichtwertsignal des kontinuierlich erfassten Stromstärkesignals entspricht, und wobei vorzugsweise ein Stoppsignal erzeugt wird, sobald ein Differenzwert zwischen dem aktuell erfassten Stromstärkesignal und dem ermittelten Gleichwertsignal um einen vorbestimmten Schwellwert, insbesondere um wenigstens 10% vom Strom-Referenzwert abweicht.

### Bezugszeichenliste

- 1: Dachfenster
- 2: Rollladen
- 3: Rollladenkasten
- 4: Elektromotor
- 5: Rollladenpanzer
- 10: Steuerung
- 11: Messelement
- 12: Addierelement
- 13: Integrierglied
- 14: Differenzierglied
- 15: Vergleichsglied

## Patentansprüche

1. Verfahren zum Überwachen des Betriebs eines Rollladens (2), der elektrisch mittels eines Gleichstrommotors (4), antreibbar ist, aufweisend die folgenden Schritte:
- Messen eines während des Betriebs des Rollladens (2) durch den Gleichstrommotor (4) aufgenommenen Stroms mittels eines Messelements (11);
- Ermitteln mindestens eines Strom-Referenzwertes durch wiederholtes Bestimmen des Mittelwerts des gemessenen Stroms mittels eines positiv rückgekoppelten Integrierglieds (13); und
- Bilden eines Differenzsignals zwischen dem Strom-Referenzwert und einem aktuell durch den Gleichstrommotor (4) aufgenommenen und gemessenen Strom mittels eines Differenzierglieds (14).

2. Verfahren nach Anspruch 1,
**gekennzeichnet durch**
Vergleichen des Differenzsignals mit einem vorbestimmten Schwellwert.

3. Verfahren nach Anspruch 2,
**dadurch gekennzeichnet, dass**
der Betrieb des Rollladens (2) unterbrochen oder abgestellt wird, wenn das Differenzsignal den vorbestimmten Schwellwert überschreitet.

4. Verfahren nach einem der vorhergehenden Ansprüche,
**dadurch gekennzeichnet, dass**
der von dem Gleichstrommotor (4) aufgenommene Strom kontinuierlich und/oder im Normalbetrieb des Rollladens (2) gemessen wird.

5. Verfahren nach einem der vorhergehenden Ansprüche,
**dadurch gekennzeichnet, dass**
der Strom in der Zuleitung des Gleichstrommotors (4) gemessen wird.

6. Verfahren nach einem der vorhergehenden Ansprüche,
**dadurch gekennzeichnet, dass**
ein optisches und/oder akustisches Warnsignal erzeugt wird, wenn der durch den Gleichstrommotor (4) aufgenommene und erfasste Strom den Strom-Referenzwert um den vorbestimmten Schwellwert überschreitet.

7. Verfahren nach einem der vorhergehenden Ansprüche,
**dadurch gekennzeichnet, dass**
ein erster Strom-Referenzwert für eine Auffahrt und ein zweiter Strom-Referenzwert für eine Abfahrt eines Rollladenpanzers (5) ermittelt wird.

8. Steuerung (10) zum Überprüfen einer Abschaltbedingung für einen Gleichstrommotor (4) eines Rollladens (2),
**dadurch gekennzeichnet, dass**
die Abschaltbedingung dann erfüllt ist, wenn ein aktuell von dem Gleichstrommotor (4) aufgenommener und von einem Messelement (11) gemessener Strom einen Strom-Referenzwert um einen vorbestimmten Schwellwert überschreitet, wobei es sich bei dem Strom-Referenzwert um einen Mittelwert des bis zu diesem Zeitpunkt mittels eines positiv rückgekoppelten Integrierglieds gemessenen Stroms handelt.

9. Rollladen (2), insbesondere zur Montage an einem Dachfenster (1), mit
- einem Rollladenpanzer (5);
- einem Gleichstrommotor (4) zum Auf- und Abfahren des Rollladenpanzers (5); und
- einem Messelement (11) zum Messen eines von dem Gleichstrommotor (4) aufgenommenen Stroms;
**gekennzeichnet durch**
eine Steuerung (10) gemäß Anspruch 8.

10. Rollladen nach Anspruch 9,
**dadurch gekennzeichnet, dass**
das Messelement (11) zum kontinuierlichen Messen des von dem Gleichstrommotor (4) aufgenommenen Stroms ausgebildet ist und/oder der Rollladen (2) einen Gleichstrommotor aufweist.

11. Rollladen nach einem der vorhergehenden Ansprüche 9 bis 10,
**dadurch gekennzeichnet, dass**
die Steuerung (10) Folgendes aufweist:
- ein Integrierglied (13) zur Bestimmung des Strom-Referenzwertes;
- ein Differenzierglied (14) zur Ermittlung eines Differenzwertes zwischen einem aktuell erfassten Stromstärkewert und dem Strom-Referenzwert; und/oder
- ein Vergleichsglied (15) zum Vergleichen des Differenzwertes mit dem Strom-Referenzwert.

12. Rollladen nach einem der vorhergehenden Ansprüche 9 bis 11,
**dadurch gekennzeichnet, dass**
die Steuerung (10) mit einem Schalter zur Unterbrechung der Stromzufuhr zum Gleichstrommotor (4) zusammenwirkt.

13. Rollladen nach einem der vorhergehenden Ansprüche 9 bis 12,
**dadurch gekennzeichnet, dass**
die Steuerung (10) zwei unabhängige Strom-Referenzwerte ermittelt, wobei ein erster Strom-Referenzwert einer Auffahrt und ein zweiter Strom-Referenzwert einer Abfahrt des Rollladens (2) zugeordnet ist und/oder die Steuerung (10) dazu ausgebildet ist, ein Gegenfahrtsignal zu erzeugen, derart, dass der Rollladenpanzer (5) zumindest teilweise in eine Gegenrichtung bewegt wird, wenn die Abschaltbedingung erfüllt ist.

14. Rollladen nach einem der vorhergehenden Ansprüche 9 bis 13,
**dadurch gekennzeichnet, dass**
eine Signaleinrichtung zum Erzeugen eines optischen und/oder akustischen Warnsignals vorgesehen ist, wenn der durch den Gleichstrommotor aufgenommene und von dem Messelement (11) erfasste Strom den Strom-Referenzwert um den vorbestimmten Schwellwert überschreitet.

15. Rollladen nach einem der vorhergehenden Ansprüche 9 bis 14,
**dadurch gekennzeichnet, dass**
der Gleichstrommotor (4) von einer Solaranlage mit Energie gespeist wird.

16. Rollladen nach einem der vorhergehenden Ansprüche 9 bis 15 oder Verfahren nach Anspruch 2 oder 3,
**dadurch gekennzeichnet, dass**
der Schwellwert im Bereich von ca. 10-30% des Strom-Referenzwertes liegt und insbesondere, ca. 10%, ca. 15%, ca. 20%, ca. 25% oder ca. 30% des Strom-Referenzwertes beträgt.

17. Dachfenster (1) mit einem Rollladen (2) nach einem der vorhergehenden Ansprüche 9 bis 16.

## Claims

1. A method for monitoring the operation of a roller shutter (2) able to be electrically driven by a direct current motor (4) comprising the following steps:
- measuring the current drawn by the direct current motor (4) during the operation of the roller shutter (2) by means of a measuring element (11);
- establishing at least one current reference value by repeatedly determining the average value of the measured current using a positive feedback integrator (13); and
- forming a differential signal between the current reference value and a current momentarily drawn by the direct current motor (4) and measured by means of a differentiator (14).

2. The method according to claim 1,
**characterized by**
comparing the differential signal to a predetermined threshold.

3. The method according to claim 2,
**characterized in that**
the operation of the roller shutter (2) is interrupted or stopped when the differential signal exceeds the predetermined threshold.

4. The method according to any one of the preceding claims,
**characterized in that**
the current drawn by the direct current motor (4) is measured continuously and/or during the normal operation of the roller shutter (2).

5. The method according to any one of the preceding claims,
**characterized in that**
the current in the input lead of the direct current motor (4) is measured.

6. The method according to any one of the preceding claims,
**characterized in that**
an optical and/or acoustic warning signal is generated if the measured current drawn by the direct current motor (4) exceeds the current reference value by the predetermined threshold.

7. The method according to any one of the preceding claims,
**characterized in that**
a first current reference value is established for raising and a second current reference value is established for lowering a roller shutter curtain (5).

8. A controller (10) for verifying a shut-off condition for a direct current motor (4) of a roller shutter (2),
**characterized in that**
the shut-off condition is then met when the current momentarily drawn by the direct current motor (4) and measured by a measuring element (11) exceeds a current reference value by a predetermined threshold, wherein the current reference value is an average value of the current measured up to that point in time by means of a positive feedback integrator.

9. A roller shutter (2), particularly for installation on a dormer window (1), comprising
- a roller shutter curtain (5);
- a direct current motor (4) for raising and lowering the roller shutter curtain (5); and
- a measuring element (11) for measuring the current drawn by the direct current motor (4),
**characterized by**
a controller (10) in accordance with claim 8.

10. The roller shutter according to claim 9,
**characterized in that**
the measuring element (11) is designed to continuously measure the current drawn by the direct current motor (4) and/or the roller shutter (2) comprises a direct current motor.

11. The roller shutter according to one of preceding claims 9 to 10,
**characterized in that**
the controller (10) comprises the following:
- an integrator (13) for determining the current reference value;
- a differentiator (14) for establishing a differential value between a momentarily detected amperage and the current reference value; and/or
- a comparator (15) for comparing the differential value to the current reference value.

12. The roller shutter according to any one of preceding claims 9 to 11,
**characterized in that**
the controller (10) cooperates with a switch for interrupting the power supply to the direct current motor (4).

13. The roller shutter according to any one of preceding claims 9 to 12,
**characterized in that**
the controller (10) establishes two independent current reference values, wherein a first current reference value is associated with raising the roller shutter (2) and a second current reference value is associated with lowering the roller shutter (2) and/or the controller (10) is designed so as to generate a counter-motion signal such that the roller shutter curtain (5) is at least partially moved in an opposite direction when the shut-off condition is met.

14. The roller shutter according to any one of preceding claims 9 to 13,
**characterized in that**
a signaling device is provided for generating an optical and/or acoustic warning signal when the current drawn by the direct current motor and measured by the measuring element (11) exceeds the current reference value by the predetermined threshold.

15. The roller shutter according to any one of preceding claims 9 to 14,
**characterized in that**
the direct current motor (4) is supplied with energy by a solar system.

16. The roller shutter according to any one of preceding claims 9 to 15 or the method according to claim 2 or 3,
**characterized in that**
the threshold is within the range of approximately 10-30% of the current reference value and particularly amounts to approximately 10%, approximately 15%, approximately 20%, approximately 25% or approximately 30% of the current reference value.

17. A dormer window (1) comprising a roller shutter (2) in accordance with any one of preceding claims 9 to 16.

## Revendications

1. Procédé pour surveiller le fonctionnement d'un volet roulant (2) qui est susceptible d'être entraîné électriquement moyen d'un moteur à courant continu (4), comprenant les étapes suivantes :
- on mesure un courant absorbé par le moteur à courant continu (4) pendant le fonctionnement du volet roulant (2), au moyen d'un élément de mesure (11) ;
- on détermine au moins une valeur de référence de courant par détermination répétée de la valeur moyenne du courant mesuré au moyen d'un circuit d'intégration à rétroaction (13) ; et
- on forme un signal différentiel entre la valeur de référence de courant et on mesure un courant actuellement absorbé par le moteur à courant continu (4), au moyen d'un circuit différentiel (14).

2. Procédé selon la revendication 1,
**caractérisé en ce que** l'on compare le signal différentiel avec une valeur seuil prédéterminée.

3. Procédé selon la revendication 2, **caractérisé en ce que** l'on interrompt où l'on arrête le fonctionnement du volet roulant (2) si le signal différentiel dépasse la valeur seuil prédéterminée.

4. Procédé selon l'une des revendications précédentes,
**caractérisé en ce que** le courant absorbé par le moteur à courant continu (4) est mesuré en continu et/ou lors du fonctionnement normal du volet roulant (2).

5. Procédé selon l'une des revendications précédentes,
**caractérisé en ce que** le courant est mesuré dans la ligne d'amenée au moteur à courant continu (4).

6. Procédé selon l'une des revendications précédentes,
**caractérisé en ce que** l'on engendre un signal d'avertissement optique et/ou acoustique si le courant absorbé par le moteur à courant continu (4) et détecté dépasse la valeur de référence du courant à raison de la valeur seuil prédéterminée.

7. Procédé selon l'une des revendications précédentes,
**caractérisé en ce que** l'on détermine une première valeur de référence de courant pour un mouvement montant, et une seconde valeur de référence de courant pour un mouvement descendant d'un tablier de volet roulant (5).

8. Commande (10) pour contrôler une condition de coupure pour un moteur à courant continu (4) d'un volet roulant (2),
**caractérisé en ce que** la condition de coupure est satisfaite si un courant actuellement absorbé par un moteur à courant continu (4) et mesuré par un élément de mesure (11) dépasse une valeur de référence de courant à raison d'une valeur seuil prédéterminée, dans laquelle la valeur de référence de courant est une valeur moyenne du courant mesuré jusqu'à cet instant au moyen d'un circuit d'intégration à rétroaction positive.

9. Volet roulant (2), en particulier pour le montage sur un vasistas (1), comprenant
- un tablier de volet roulant (5) ;
- un moteur à courant continu (4) pour faire monter et pour faire descendre le tablier de volet roulant (5) ; et
- un élément de mesure (11) pour mesurer un courant absorbé par le moteur à courant continu (4) ;
**caractérisé par** une commande (10) selon la revendication 8.

10. Volet roulant selon la revendication 9,
**caractérisé en ce que** l'élément de mesure (11) est réalisé pour une mesure continue du courant absorbé par le moteur à courant continu (4) et/ou le volet roulant (2) comprend un moteur à courant continu.

11. Volet roulant selon l'une des revendications 9 et 10,
**caractérisé en ce que** la commande (10) comprend les éléments suivants :
- un circuit d'intégration (13) pour la détermination d'une valeur de référence du courant ;
- un circuit différentiel (14) pour la détermination d'une valeur différentielle entre une valeur de l'intensité du courant actuellement détecté et la valeur de référence du courant ; et/ou
- un circuit comparateur (15) pour comparer la valeur différentielle avec la valeur de référence du courant.

12. Volet roulant selon l'une des revendications 9 à 11,
**caractérisé en ce que** la commande (10) coopère avec un commutateur pour l'interruption de l'alimentation de courant au moteur à courant continu (4).

13. Volet roulant selon l'une des revendications précédentes 9 à 12,
**caractérisé en ce que** la commande (10) détermine deux valeurs de référence de courante indépendantes, dans lesquelles une première valeur de référence de courant est associée à un mouvement montant et une seconde valeur de référence de courant est associée à un mouvement descendant du volet roulant (2), et/ou **en ce que** la commande (10) est réalisée pour engendrer un signal de déplacement antagoniste, de telle façon que le tablier de volet roulant (5) est déplacé au moins partiellement dans une direction opposée si la condition de coupure est satisfaite.

14. Volet roulant selon l'une des revendications précédentes 9 à 13,
**caractérisé en ce qu'**il est prévu un système de signalisation pour engendrer un signal d'avertissement optique et/ou acoustique si le courant absorbé par le moteur à courant continu et détecté par l'élément de mesure (11) dépasse la valeur de référence de courant à raison de la valeur seuil prédéterminée.

15. Volet roulant selon l'une des revendications précédentes 9 à 14,
**caractérisé en ce que** le moteur à courant continu (4) est alimenté en énergie depuis une installation solaire.

16. Volet roulant selon l'une des revendications précédentes 9 à 15 ou procédé selon la revendication 2 ou 3,
**caractérisé en ce que** la valeur seuil est dans la plage d'environ 10 à 30 % de la valeur de référence du courant et s'élève en particulier à environ 10 %, environ 15 %, environ 20 %, environ 25 % ou environ 30 % de la valeur de référence du courant.

17. Vasistas (1) comprenant un volet roulant (2) selon l'une des revendications précédentes 9 à 16.
